# EUROPÄISCHE PATENTSCHRIFT

(11) **EP 1 146 266 B1**
(45) Veröffentlichungstag und Bekanntmachung des Hinweises auf die Patenterteilung: **23.06.2010**
(21) Anmeldenummer: 01108686.5
(22) Anmeldetag: 06.04.2001
(51) Int. Cl.: F16J 15/32

(54) **Bürstendichtung**
Brush seal
Joint à brosses

(30) Priorität: 13.04.2000 DE 10018273
(43) Veröffentlichungstag der Anmeldung: 17.10.2001
(73) Patentinhaber: MTU Aero Engines GmbH, 80995 München (DE)
(72) Erfinder: Gail, Alfons, 86316 Friedberg (DE); Prins, Lodewijk, 86495 Eurasburg (DE); Werner, Klemens, 80999 München (DE)

(56) Entgegenhaltungen:
- EP-A- 1 008 787
- DE-A- 19 628 559
- DE-A- 19 720 648
- US-A- 5 066 024
- US-A- 5 597 167

## Beschreibung

Die Erfindung betrifft eine Bürstendichtung, zum Abdichten eines Rotors gegen einen Stator, umfassend ein am Stator oder Rotor gehaltenes, eine Deckplatte und eine Stützplatte aufweisendes Borstengehäuse mit einer Umfangsfläche und zwei Stirn- oder Seitenflächen, in dem mit ihren freien Enden zum Rotor oder Stator ausgerichtete Borsten befestigt sind, gemäß dem Oberbegriff des Patentanspruchs 1.

Bei bekannten Bürstendichtungen laufen die freien Enden der in einem eine Deck- und Stützplatte aufweisenden Borstengehäuse befestigten Borsten gegen eine Dichtfläche vom Rotor oder Stator und dichten so den ringförmigen Spalt zwischen Rotor und Stator ab. Mit derartigen Bürstendichtungen läßt sich z.B. bei Einsatz in stationären Gasturbinen oder Flugtriebwerken bei guter Dichtwirkung und üblicher Anordnung axialer Bauraum gegenüber alternativ einsetzbaren Dichtungen, wie Labyrinthdichtungen, einsparen. Die Borsten der Bürstendichtungen können in Richtung des Rotordrehsinns in einem Winkel von z.B. 40° bis 50° angestellt sein, um ein weiches, radiales Auslenken der Borsten beim Kontakt mit dem Rotor zu ermöglichen. Aufgrund der angestellten Borsten ist eine sichere Funktion bei Falscheinbau der Bürstendichtung, d.h. die Bürstendichtung ist in falscher Ausrichtung in ihren Sitz am Stator oder Rotor eingesetzt und die Borsten sind entgegen des Rotordrehsinns angestellt, nicht gewährleistet, da sich die Borsten zum Teil stark verbiegen können. Die Bürstendichtung wird in ihrem Sitz am Stator oder Rotor mit einer Presspassung gehalten, um während des Betriebs ein Verdrehen zu verhindern. Die Presspassung kann sich insbesondere bei großen Außendurchmessern des Borstengehäuses im Hinblick auf die Materialbelastungen als kritisch erweisen.

Das Dokument DE 196 28 559 A betrifft eine Bürstendichtung mit einer sogenannten Speichenzentrierung. Dazu sind am Borstengehäuse mindestens drei gleitsteinartige Vorsprünge (Gleitelemente 5) integral angeordnet, welche jeweils in Führungselementen (6) radial beweglich gelagert sind. Die Elemente (5, 6) wirken als Verdrehsicherung, verhindern eine Fehlmontage und zentrieren die Bürstendichtung radial, z.B. relativ zu einer Welle. Die Konstruktion ist sehr aufwändig und erfordert hohe Präzision.

Das Dokument EP-A-1 008 787 zeigt Bürstendichtungen, welche über einen radialen Flansch (28) mit axialen Bohrungen (29) fixierbar sind.

Das Dokument US-A-5 597 167 schützt Bürstendichtungen, die mittels blechartiger, abgewinkelter Zungen (84, 88) gegen Verdrehen und Fehlmontage gesichert sind.

Das Dokument US-A-5 066 024 schützt Bürstendichtungen, die mittels eines axialen Flansches (12) und radialer Bohrungen (7) fixierbar sind.

Das Dokument DE 197 20 648 A betrifft Bürstendichtungen, deren Borstengehäuse aus zwei Teilen durch Bördeln hergestellt ist. Die axial vorstehende Bördellippe (7) kann in Verbindung mit einer Nut/Hinterschneidung im Stator gegen Fehlmontage sichern. Eine Verdrehsicherung ist dabei nicht gegeben.

Das der vorliegenden Erfindung zugrundeliegende Problem besteht darin, eine Bürstendichtung der eingangs beschriebenen Gattung bereitzustellen, mit der bei ihrer Montage in einem Gehäuse od.dgl. stets ein richtiger, verdrehsicherer Einbau gewährleistet ist, wobei die so verbesserte Bürstendichtung möglichst einfach bzw. ohne zusätzliche Herstellungsschritte gefertigt werden soll.

Erfindungsgemäß ist das erste Positionierungsmittel als wenigstens ein über die Umfangsfläche des Borstengehäuses vorstehender Schweißpunkt ausgebildet, der nach der Montage in eine als zweites Positionierungsmittel entsprechend ausgebildete Aussparung am Stator oder Rotor zur definierten, verdrehsicheren Positionierung der Bürstendichtung eingreift. Dazu wird ein Schweißverfahren mit geringer Wärmeentwicklung eingesetzt, um ein Verformen der Platten zu vermeiden.

Ein solcher Vorsprung in Form eine Schweißpunkts erstreckt sich umfänglich nur über einen kurzen Abschnitt und dient gleichzeitig als Verdrehsicherung der Bürstendichtung in ihrem Sitz am Stator oder Rotor. Eine derartige Verdrehsicherung hat prinzipiell den Vorteil, dass die Pressung der Bürstendichtung in ihrem Sitz geringer gewählt werden kann, was insbesondere bei Bürstendichtungen mit großen Durchmessern an der Umfangsfläche des Borstengehäuses im Hinblick auf die Materialbelastung von Vorteil ist. Der Schweißpunkt kann auch als wenigstens eine sich über etwa 10 mm entlang des Umfangs erstreckende Schweißnaht ausgebildet sein

Erfindungsgemäß ist das erste Positionierungsmittel alternativ als wenigstens ein über die Seitenfläche des Borstengehäuses vorstehender, sich nicht um den ganzen Umfang herum erstreckender, integraler Vorsprung ausgebildet sein, der in eine als zweites Positionierungsmittel entsprechend ausgebildete Aussparung am Stator oder Rotor oder dem separaten Befestigungselement für die Bürstendichtung eingreift. Insbesondere bei dieser Ausgestaltung kann das erste Positionierungsmittel auch als Aussparung in der Seitenfläche und das zweite Positionierungsmittel als Vorsprung am Stator oder am Rotor oder an einem separaten Befestigungselement ausgebildet sein. In jedem Fall ist der Vorsprung linsen- oder kegelförmig ausgebildet.

Durch die Erhöhung wird die axiale Länge des Borstengehäuses vergrößert und bei falschem Einbau, bei dem die Borsten entgegen des Rotordrehsinns ausgerichtet wären, eine Montage der Bürstendichtung verhindert, da sich das abschließend einzusetzende Befestigungselement nicht montieren läßt. Die Erhöhung erstreckt sich umfänglich nur abschnittsweise und stellt gleichzeitig eine Verdrehsicherung der Bürstendichtung in ihrem Sitz am Stator oder Rotor dar.

Im Hinblick auf die z.B. zur Wartung erforderlich Demontage der Bürstendichtung ist eine Vereinfachung der Montage des weiteren dadurch möglich, dass die Deckplatte oder die Stützplatte einen Bördelabschnitt aufweist, die jeweils andere Platte an ihrem der Umfangsfläche des Borstengehäuses nahen Ende einen über die Seitenfläche vorstehenden bzw. sich von den Borsten weg erstreckenden Axialabschnitt aufweist und der Bördelabschnitt das freie Ende des Axialabschnitts umgreift und mit seinem freien Ende unter Bildung einer Hinterschneidung radial darüber hervorsteht. Wird das Borstengehäuse z.B. an seiner äußeren Umfangsfläche an einem Stator gehalten, so ist die Hinterschneidung im allgemeinen radial nach innen geöffnet.

Eine solche Maßnahme läßt sich insbesondere bei durch Tiefziehen hergestellter Deck- oder Stützplatte fertigungstechnisch einfach ohne zusätzlichen Arbeitsschritt realisieren und schafft die Möglichkeit, dass sich die Bürstendichtung bei Verwendung eines entsprechend ausgebildeten Werkzeuges, das hinter die Hinterschneidung greift, zur Wartung oder zum Austausch schnell aus ihrem Sitz im Stator oder Rotor herausziehen läßt, ohne dass eine Beschädigung des Borstengehäuses oder der Borsten auftritt.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine Draufsicht auf einen Ausschnitt einer Bürstendichtung, der sich im wesentlichen auf die im Rotordrehsinn angestellten Borsten beschränkt;
- Fig. 2: eine Querschnittsansicht eines Ausführungsbeispiels der erfindungsgemäßen Bürstendichtung;
- Fig. 3: eine Querschnittsansicht eines weiteren Ausführungsbeispiels der erfindungsgemäßen Bürstendichtung;
- Fig. 4: eine Querschnittsansicht eines alternativen Ausführungsbeispiels der erfindungsgemäßen Bürstendichtung mit einer Hinterschneidung.
- Fig.5: eine Querschnittsansicht einer nicht erfindungsgemäßen Bürstendichtung

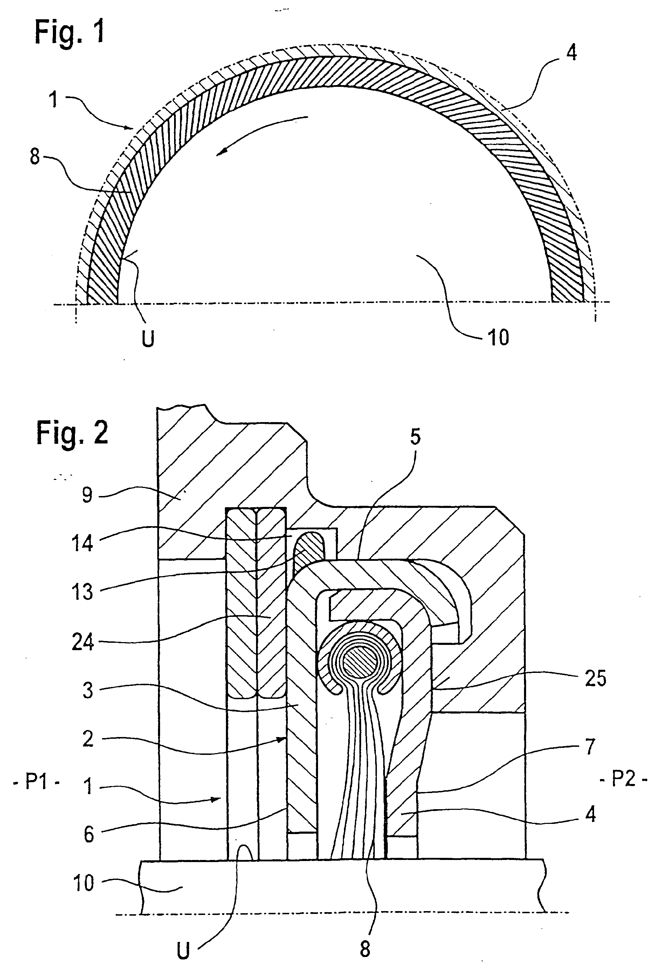

Fig. 1 zeigt eine Draufsicht auf einen Ausschnitt einer im ganzen mit 1 bezeichneten Bürstendichtung, der auf die wesentlichen Teile zur Darstellung der im Rotordrehsinn angestellten Borsten 8 beschränkt ist. Fig. 1 zeigt einen Abschnitt einer Stützplatte 4, die zusammen mit einer nicht dargestellten Deckplatte 3 ein Borstengehäuse 2 bildet. Die Borsten 8 berühren mit ihren freien Enden eine Umfangsfläche U eines Rotors 10 und sind in einem Winkel zwischen 40° oder bis 50° im Rotordrehsinn, der mit einem Pfeil gekennzeichnet ist, von ihrer Einspannstelle an zur Radialen angestellt. In Fig. 1 verläuft die strichpunktierte Trennlinie in Radialrichtung. Durch die Anstellung der Borsten 8 ist ein weiches, radiales Auslenken des Borstenpakets bei Kontakt mit dem Rotor 10 gewährleistet. Dieses führt zu einem geringen Verschleiß der Borsten 8 ebenso wie zu einer guten Dichtwirkung der Bürstendichtung 1.

Durch die Anstellung der Borsten 8 darf die Bürstendichtung 1 nicht in beliebiger Ausrichtung in ihrem Sitz am Stator, wie z.B. einem Gehäuse, oder alternativ am Rotor montiert sein. Bei einem Falscheinbau der Bürstendichtung 1 sind die Borsten 8 in einem Winkel entgegen des Rotordrehsinns angestellt, was zum Verbiegen der Borsten 8 und somit einem Ausfall der Dichtwirkung führen kann.

Fig. 2 zeigt eine Querschnittsansicht eines Ausführungsbeispiels der Bürstendichtung 1, die in einen Sitz in einem Gehäuse 9 eingesetzt ist und den ringförmigen Spalt zu einem Rotor 10 mit einer Umfangsfläche U zwischen einem Raum höheren Drucks P1 und einem Raum niedrigeren Drucks P2 abdichtet. Die Bürstendichtung 1 umfaßt ein Borstengehäuse 2, das durch Bördeln oder .dgl. einer Deckplatte 3 und einer Stützplatte 4, zwischen denen Borsten 8 gehalten sind, hergestellt ist. Bei der Montage wird die Bürstendichtung 1 in den Sitz geschoben, bis sie mit einer Seitenfläche 7 ihrer Stützplatte 4 gegen eine Gehäuseschulter 25 stößt. Die axiale Länge des Sitzes für die Bürstendichtung 1 wird durch den Abstand zwischen der Gehäuseschulter 25 und dem Befestigungselement 24 festgelegt.

Zur Verhinderung des Falscheinbaus weist das Borstengehäuse 2 einen über seine Umfangsfläche 5 vorstehenden, als Schweißpunkt 13 oder sich über etwa 10 mm entlang des Umfangs erstreckende Schweißnaht (oder mehrere Schweißnähte) ausgebildeten Vorsprung auf, der in eine entsprechend ausgebildete Aussparung 14 in dem Gehäuse 9 zur eindeutigen Positionierung des Borstengehäuses 2 eingreift. Der Schweißpunkt 13 erstreckt sich in Umfangsrichtung lediglich abschnittsweise und dient so auch als Sicherung gegen Verdrehen der Bürstendichtung 1 in ihrem Sitz. Hierdurch läßt sich die Presspassung an einer Umfangsfläche 5 des Borstengehäuses 2 unter Entlastung der Bauteile geringer wählen.

Ein Einsetzen der Bürstendichtung 1 in falscher Ausrichtung in den Sitz im Gehäuse 9 ist nicht möglich, weil aufgrund des über die Umfangsfläche 5 vorstehenden Schweißpunkts 13 das Borstengehäuse 2 gegen das Gehäuse 9 stößt und sich nicht in den vorgesehenen Sitz schieben läßt. Die Aussparung 14 erstreckt sich nicht ringförmig urn den gesamten Umfang des Sitzes für die Bürstendichtung 1 in dem Gehäuse 9 herum, sondern ist lediglich ein an die Form des Schweißpunkts 13, der z.B. ein sich verjüngender Zapfen sein kann, angepaßter Ausschnitt im Gehäuse 9.

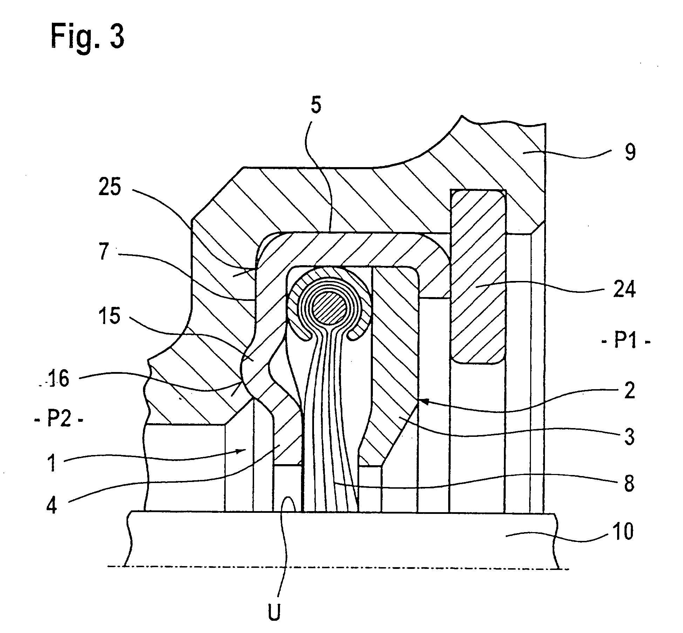

Fig. 3 zeigt eine Querschnittsansicht eines weiteren Ausführungsbeispiels der Bürstendichtung 1, die im wesentlichen aus in einem Borstengehäuse 2 gehaltenen Borsten 8 besteht. Das Borstengehäuse 2 umfaßt eine Deckplatte 3 und eine Stützplatte 4, an der sich die Borsten 8 bei anliegendem Differenzdruck zwischen einem Raum höheren Drucks P1 und einem Raum niedrigeren Drucks P2 abstützen. Die Bürstendichtung 1 ist am Stator 9 zwischen einem Befestigungselement 24 und einer Gehäuseschulter 25 gehalten und dichtet den ringförmigen Spalt zu einem Rotor 10 mit einer Umfangsfläche U ab.

Zur Verhinderung des Falscheinbaus, bei dem die Borsten 8 in einem Winkel entgegen des Rotordrehsinns ausgerichtet wären, weist das Borstengehäuse 2 an seiner Stützplatte 4 ein als linsenförmige Erhöhung 15 ausgebildetes, erstes Mittel auf, das mit einem als Aussparung 16 im Stator 9 ausgebildeten, zweiten Mittel über einen Formschluß zusammenwirkt. Die Erhöhung 15 steht über eine Seitenfläche 7 des Borstengehäuses 2 vor und erstreckt sich im wesentlichen in Axialrichtung. Die Erhöhung 15 erstreckt sich in Umfangsrichtung nur über einen kurzen Abschnitt und stellt so gleichzeitig eine Verdrehsicherung der Bürstendichtung 1 in ihrem Sitz im Gehäuse 9 dar, weil die Aussparung 16 an die Form der Erhöhung 15 im wesentlichen angepaßt ist.

Da die axiale Länge des Bauraums für die Bürstendichtung 1 durch den Abstand zwischen dem Befestigungselement 24 und der Gehäuseschulter 25 vorgegeben ist, ist eine Montage der Bürstendichtung 1, die das abschließende Einsetzen des scheibenringförmigen Befestigungselements 24 in eine Gehäuseaussparung umfasst, nicht möglich, wenn die Erhöhung 15 nicht in die Aussparung 16 eingreift. Die Erhöhung 15 läßt sich beim Tiefziehen der Deck- und Stützplatte 3 bzw. 4 durch entsprechende Ausgestaltung des Tiefziehwerkzeugs ohne zusätzlichen Arbeitsschritt ausbilden. Es können entlang der radialen und umfänglichen Erstreckung der Deck- und Stützplatte 3 bzw. 4 mehrere Erhöhung 15 vorgesehen werden, die unterschiedliche Formen aufweisen können.

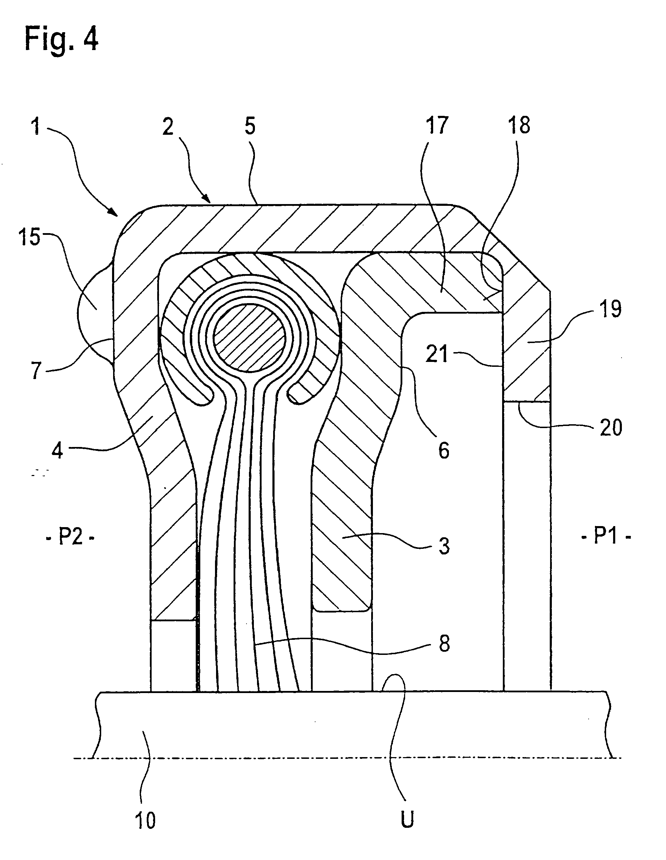

Fig. 4 zeigt ein weiteres Ausführungsbeispiel der Bürstendichtung 1 in einer stark vereinfachten Querschnittsansicht, die einen ringförmigen Spalt zwischen einem nicht dargestellten Stator und einem Rotor 10 mit einer Umfangsfläche U abdichtet. Die Bürstendichtung 1 umfaßt im wesentlichen ein Borstengehäuse 2 aus einer Deckplatte 3 und einer Stützplatte 4, in dem ein Paket oder Bündel von Borsten 8 gehalten ist. Bei anliegendem Differenzdruck zwischen einem Raum höheren Drucks P1 und einem Raum niedrigeren Drucks P2 stützen sich die Borsten an der Stützplatte 4 ab. Das Borstengehäuse 2 weist eine Umfangsfläche 5 sowie eine zum Raum höheren Drucks P1 blickende Seitenfläche 6 und eine zum Raum niedrigen Drucks P2 blickende Seitenfläche 7 auf. Die Borsten 8 berühren mit ihren freien Enden die Umfangsfläche U des Rotors 10.

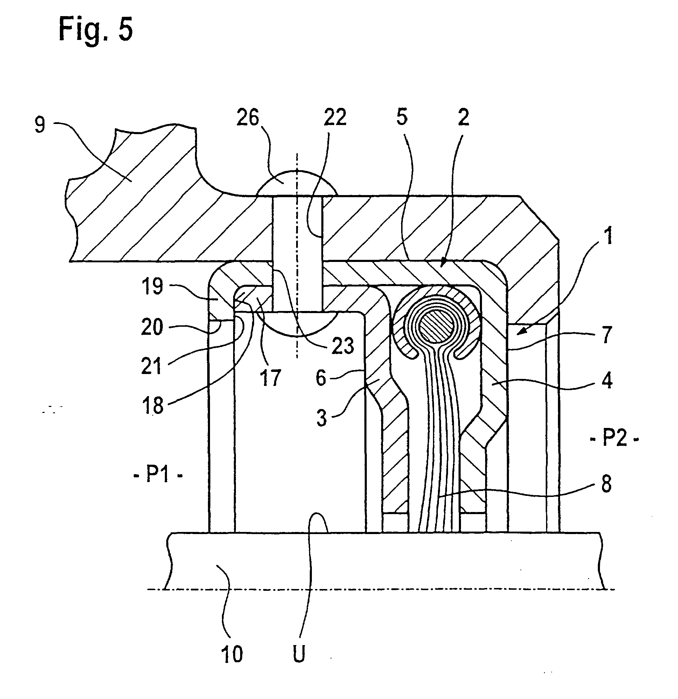

Zur Montage wird die Bürstendichtung 1, wie bereits oben beschrieben, in einen Sitz an einem Stator 9, wie einem Gehäuse, geschoben, bis die Seitenfläche 7 der Stützplatte 4 bzw. des Borstengehäuses 2 gegen eine in Fig. 5 nicht dargestellte Gehäuseschulter 25 stößt. Die Deckplatte 6 weist an ihrem der Umfangsfläche 5 des Borstengehäuses 2 nahen Endabschnitt einen Axialabschnitt 17 mit einem freien Ende 18 auf, der über die Seitenfläche 6 der Deckplatte 3 vorsteht. Die Stützplatte 4, welche in diesem Ausführungsbeispiel die Umfangsfläche 5 des Borstengehäuses 2 bildet, weist an einem Endabschnitt, der nicht der dem Rotor 10 zugewandte, innere Endabschnitt ist, eine Bördellippe 19 auf, die das freie Ende 18 des Axialabschnitts 17 der Deckplatte 3 zur Bildung des Borstengehäuses 2 umgreift. Der Bördelabschnitt 19 steht mit seinem freien Ende 20 radial über den Axialabschnitt 17 der Deckplatte 3 vor und weist eine zur Seitenfläche 6 der Deckplatte 3 blickende, innere Seitenfläche 21 auf, die eine Hinterschneidung bildet. In diese Hinterschneidung kann ein entsprechend ausgebildetes Werkzeug einreifen, das beim Abziehen der Bürstendichtung 1 aus ihrem Sitz in einem nicht dargestellten Stator 9 an die innere Seitenfläche 21 der Bördellippe 19 angelegt wird. Auf diese Weise läßt sich die Bürstendichtung 1 ohne etwaige Beschädigungen zur Wartung oder zum Austausch demontieren.

Die Stützplatte 4 weist an ihrer Seitenfläche 7 eine in der Darstellung gemäß Fig. 4 hinter der Bildebene liegende Erhöhung 15 auf, durch die axiale Länge des Borstengehäuses 2 vergrößert wird. Wird die Bürstendichtung 1 in falscher Ausrichtung in den Gehäusesitz geschoben, so kann die Erhöhung 15 nicht in eine in Fig. 4 nicht dargestellte, entsprechend ausgebildete Aussparung im Gehäuse eingreifen. Infolgedessen lassen sich die in Fig. 2 und 3 gezeigten Befestigungselemente 24 nicht in die im Gehäuse vorgesehene Nut zur Befestigung der Bürstendichtung 1 in ihrem Sitz einsetzen. Die Montage kann somit bei Falscheinbau nicht abgeschlossen werden.

Fig. 5 zeigt eine Querschnittsansicht einer der Bürstendichtung 1 aus Fig. 4 ähnlichen jedoch nicht erfindungsgemäßen Bürstendichtung 1, die in einem Sitz in einem als Gehäuse 9 ausgebildeten Stator gehalten ist und einen ringförmigen Spalt zu einem Rotor 10 mit einer Umfangsfläche U zwischen einem Raum höheren Druckes P1 und einem Raum niedrigen Druckes P2 abdichtet. Die Bürstendichtung 1 umfaßt im wesentlichen in einem Borstengehäuse 2 gehaltenen Borsten 8. Das Borstengehäuse 2 weist eine Deckplatte 3 und eine Stützplatte 4 auf, an der sich die Borsten 8 bei anliegendem Differenzdruck abstützen. Das Borstengehäuse 2 weist eine zum Raum höheren Drucks P1 blickende Seitenfläche 6, eine zum Raum niedrigen Druckes P2 blickende Seitenfläche 7 sowie eine Umfangsfläche 5 auf.

Um die Demontage der Bürstendichtung 1 aus ihrem Sitz am Stator 9 zu erleichtern, weist die Deckplatte 3 einen Axialabschnitt 17 mit einem freien Ende 18 auf. Die die Umfangsfläche 5 des Borstengehäuses 2 bildende Stützplatte 4 weist einen Bördelabschnitt 19 auf, der das freie Ende 18 des Axialabschnitts 17 der Deckplatte 3 unter Bildung des Borstengehäuses 2 umgreift. Der Bördelabschnitt 19 steht mit seinem freien Ende 20 unter Bildung einer Hinterschneidung 21 radial über das freie Ende 18 des Axialabschnitts 17 der Deckplatte 3 vor, so dass die Bürstendichtung 1 bei Einsatz eines entsprechenden Werkzeugs auf einfache Weise ohne Beschädigung aus ihrem Sitz am Stator 9 demontiert werden kann.

Zur weiteren Verbesserung der Montage weist das Gehäuse 9 einerseits und der Axialabschnitt 17 der Deckplatte 3 und der Bördelabschnitt 19 der Stützplatte 4 jeweils eine Bohrung 22 bzw. 23 auf, die bei korrekter Positionierung der Bürstendichtung 1 in dem Sitz am Gehäuse 9 fluchten. Um eine eindeutige Positionierung der Bürstendichtung 1 in dem Sitz am Gehäuse 9 ebenso wie eine Verdrehsicherung der Bürstendichtung 1 zu gewährleisten, wird in die Bohrungen 22, 23 eine Niete 26 od.dgl. eingesetzt. Wird die Bürstendichtung 1 in falscher Ausrichtung in den Sitz am Gehäuse 9 eingesetzt, fluchten die Bohrungen 22 bzw. 23 im Gehäuse 9 bzw. dem Axialabschnitt 17 der Deckplatte 3 und dem Bördelabschnitt 19 der Stützplatte 4 nicht, so dass ein Vernieten nicht möglich ist und ein Falscheinbau bemerkt wird.

Die Borsten 8 sind bei den in Fig. 2 bis 5 dargestellten Ausführungsbeispielen der Bürstendichtung 1 in einem Winkel von im allgemeinen 40° bis 50° im Rotordrehsinn zur Radialen angestellt.

## Patentansprüche

1. Bürstendichtungsanordnung, zum Abdichten eines Rotors (10) gegen einen Stator (9), umfassend ein am Stator (9) oder Rotor (10) gehaltenes, eine Deckplatte (3) und eine Stützplatte (4) aufweisendes Borstengehäuse (2) mit einer Umfangsfläche (5) und zwei Seitenflächen (6,7), in dem mit ihren freien Enden zu dem Rotor (10) oder Stator (9) ausgerichtete Borsten (8) befestigt sind, wobei das Borstengehäuse (2) an wenigstens einer Seitenfläche (6,7) oder der Umfangsfläche (5) ein erstes Positionierungsmittel (13,15) aufweist, das mit einem entsprechend ausgebildeten zweiten Positionierungsmittel (14,16) am Stator (9) oder Rotor (10) oder einem separaten Befestigungselement (24) zur eindeutigen Positionierung des Borstengehäuses (2) formschlüssig zusammenwirkt, und wobei das erste Positionierungsmittel als Vorsprung (13, 15) und das zweite Positionierungsmittel (14,16) als Aussparung oder vice versa ausgebildet ist, **dadurch gekennzeichnet, dass** das erste Positionierungsmittel als wenigstens ein über die Umfangsfläche (5) des Borstengehäuses (2) vorstehender Schweißpunkt (13) ausgebildet ist, der in eine als zweites Positionierungsmittel entsprechend ausgebildete Aussparung (14) am Stator (9) oder Rotor (10) eingreift, oder dass das erste Positionierungsmittel als wenigstens ein über die Seitenfläche (6,7) des Borstengehäuses (2) vorstehender, integraler Vorsprung (15) ausgebildet ist, der in eine als zweites Positionierungsmittel entsprechend ausgebildete Aussparung (16) am Stator (9) oder Rotor (10) oder dem Befestigungselement (24) eingreift, wobei der Vorsprung (15) linsen- oder kegelförmig ausgebildet ist.

2. Bürstendichtungsanordnung nach Anspruch 1, **dadurch gekennzeichnet, dass** die Deckplatte (3) und/oder die Stützplatte (4) durch Umformen, wie Tiefziehen, hergestellt ist.

3. Bürstendichtungsanordnung, nach Anspruch 1 oder 2, **dadurch gekennzeichnet, dass** das Borstengehäuse (2) durch Bördeln der Deckplatte (3) und der Stützplatte (4) hergestellt ist.

4. Bürstendichtungsanordnung nach Anspruch 2 oder 3, **dadurch gekennzeichnet**, der Vorsprung (15) beim Umformen der Deckplatte (3) und/oder der Stützplatte (4) ausgebildet ist.

5. Bürstendichtungsanordnung nach einem der vorhergehenden Ansprüche, **dadurch gekennzeichnet, dass** die Deckplatte (3) oder die Stützplatte (4) einen Bördelabschnitt (19) aufweist, die jeweils andere Platte (4 bzw. 3) an ihrem der Umfangsfläche (5) des Borstengehäuses (2) nahen Ende einen über die Seitenfläche (7 bzw. 6) vorstehenden Axialabschnitt (17) aufweist und der Bördelabschnitt (19) das freie Ende (18) des Axialabschnitts (17) umgreift und mit seinem freien Ende (20) unter Bildung einer Hinterschneidung (21) radial darüber vorsteht.

6. Bürstendichtungsanordnung nach Anspruch 5, **dadurch gekennzeichnet, dass** eine die Hinterschneidung bildende, innere Seitenfläche (21) des Bördelabschnitts (19) zur Seitenfläche (7,6) der jeweils anderen Platte (4,3) beabstandet ist.

7. Bürstendichtungsanordnung nach einem der vorhergehenden Ansprüche, **dadurch gekennzeichnet, dass** die Borsten (8) in einem Winkel von 40° bis 50° zur Radialen angestellt sind.

## Claims

1. A brush-seal arrangement, for sealing a rotor (10) with respect to a stator (9), comprising a bristle housing (2) that is held on the stator (9) or rotor (10) and has a cover plate (3) and a supporting plate (4) and has a peripheral surface (5) and two side faces (6, 7) and in which bristles (8) are secured that are aligned with their free ends with respect to the rotor (10) or stator (9), wherein the bristle housing (2) has on at least one side face (6, 7) or the peripheral surface (5) a first positioning means (13, 15) which cooperates in a form-locking manner with a correspondingly formed second positioning means (14, 16) on the stator (9) or rotor (10) or a separate securing element (24) for definite positioning of the bristle housing (2), and wherein the first positioning means is formed as a projection (13, 15) and the second positioning means (14, 16) is formed as a recess ,or *vice versa,* **characterised in that** the first positioning means is formed as at least one welding point (13) that protrudes over the peripheral surface (5) of the bristle housing (2) and engages into a recess (14) that is correspondingly formed as the second positioning means on the stator (9) or rotor (10), or that the first positioning means is formed as at least one integral projection (15) that protrudes over the side face (6, 7) of the bristle housing (2) and engages into a recess (16) that is correspondingly formed as the second positioning means on the stator (9) or rotor (10) or the securing element (24), wherein the projection (15) is formed in a lenticular or conical manner.

2. A brush-seal arrangement according to claim 1, **characterised in that** the cover plate (3) and/or the supporting plate (4) are/is produced by non-cutting shaping, such as deep-drawing.

3. A brush-seal arrangement according to claim 1 or 2, **characterised in that** the bristle housing (2) is produced by flanging the cover plate (3) and the supporting plate (4).

4. A brush-seal arrangement according to claim 2 or 3, **characterised in that** the projection (15) is formed during the forming of the cover plate (3) and/or the supporting plate (4).

5. A brush-seal arrangement according to one of the preceding claims, **characterised in that** the cover plate (3) or the supporting plate (4) has a flanged section (19), the other respective plate (4 or 3) has at its end that is close to the peripheral surface (5) of the bristle housing (2) an axial section (17) that protrudes over the side face (7 or 6), and the flanged section (19) embraces the free end (18) of the axial section (17) and protrudes radially thereover with its free end (20) whilst forming an undercut (21).

6. A brush-seal arrangement according to claim 5, **characterised in that** an inner side face (21) of the flanged section (19) that forms the undercut is at a distance from the side face (7, 6) of the other respective plate (4, 3).

7. A brush-seal arrangement according to one of the preceding claims, **characterised in that** the bristles (8) are set at an angle of 40° to 50° to the radial.

## Revendications

1. Ensemble de joint à brosses destiné à rendre étanche un rotor (10) contre un stator (9) comprenant un boîtier de soie (2) maintenu sur le stator (9) ou le rotor (10), présentant une plaque de recouvrement (3) et une plaque d'appui (4) avec une surface périphérique (5) et deux surfaces latérales (6, 7), dans lequel des soies (8) orientées vers le rotor (10) ou le stator (9) sont fixées avec leurs extrémités libres, le boîtier de soie (2) présentant sur au moins une surface latérale (6, 7) ou la surface périphérique (5) un premier moyen de positionnement (13, 15) qui coopère par complémentarité de formes avec un second moyen de positionnement (14, 16) réalisé de manière correspondante sur le stator (9) ou le rotor (10) ou un élément de fixation (24) séparé pour le positionnement clair du boîtier de soie (2) et le premier moyen de positionnement étant réalisé comme une saillie (13, 15) et le second moyen de positionnement (14, 16) comme un évidement ou vice versa, **caractérisé en ce que** le premier moyen de positionnement est réalisé comme au moins un point de soudure (13) dépassant de la surface périphérique (5) du boîtier de soie (2), qui s'engage dans un évidement (14) réalisé en conséquence comme second moyen de positionnement sur le stator (9) ou le rotor (10), ou **en ce que** le premier moyen de positionnement est réalisé comme au moins une saillie (15) intégrale, dépassant de la surface latérale (6, 7) du boîtier de soie (2), qui s'engage dans un évidement (16) réalisé en conséquence comme second moyen de positionnement sur le stator (9) ou le rotor (10) ou l'élément de fixation (24), la saillie (15) étant réalisée de manière lenticulaire ou conique.

2. Ensemble de joint à brosses selon la revendication 1, **caractérisé en ce que** la plaque de recouvrement (3) et/ou la plaque d'appui (4) est fabriquée par déformation plastique telle que l'emboutissage.

3. Ensemble de joint à brosses selon la revendication 1 ou 2, **caractérisé en ce que** le boîtier de soie est fabriqué par bordage de la plaque de recouvrement (3) et de la plaque d'appui (4).

4. Ensemble de joint à brosses selon la revendication 2 ou 3, **caractérisé en ce que** la saillie (15) est réalisée par déformation plastique de la plaque de recouvrement (3) et/ou de la plaque d'appui (4).

5. Ensemble de joint à brosses selon l'une quelconque des revendications précédentes, **caractérisé en ce que** la plaque de recouvrement (3) ou la plaque d'appui (4) présente une section de bordage (19), l'autre plaque respective (4, 3) présente sur son extrémité proche de la surface périphérique (5) du boîtier de soie (2) une section axiale (17) dépassant de la surface latérale (7 ou 6) et la section de bordage (19) enveloppe l'extrémité (18) libre de la section axiale (17) et dépasse avec son extrémité libre (20) en formant une contre-dépouille (21) radialement de celle-ci.

6. Ensemble de joint à brosses selon la revendication 5, **caractérisé en ce qu'**une surface latérale (21) intérieure, formant la contre-dépouille de la section de bordage (19) est espacée de la surface latérale (7, 6) de l'autre plaque respective (4, 3).

7. Ensemble de joint à brosses selon l'une quelconque des revendications précédentes, **caractérisé en ce que** les soies (8) sont mises en place dans un angle compris entre 40 et 50° par rapport à la radiale.
